# EUROPEAN PATENT APPLICATION

(11) **EP 0 596 573 A1**
(43) Date of publication of application: **11.05.1994**
(21) Application number: 93203053.9
(22) Date of filing: 01.11.1993
(51) Int. Cl.: A23B 4/052, A23L 1/318

(54) **Apparatus and process for smoking consumable products**

(30) Priority: 03.11.1992 NL 9201915
(71) Applicant: NEDERLANDSE ORGANISATIE VOOR TOEGEPAST-NATUURWETENSCHAPPELIJK ONDERZOEK TNO, NL-2628 VK Delft (NL)
(72) Inventor: van Dijk, Reijer, NL-3905 XA Veenendaal (NL)
(74) Representative: van der Kloet-Dorleijn, Geertruida W.F., Drs.

(57) **Abstract**

The invention relates to an apparatus for smoking consumable products in a smoking chamber which is provided with means for supplying and discharging the consumable products, and means for supplying and discharging smoke gases, in which the smoking chamber is connected to a smoke generator and is provided with means for regulating the smoke gas concentration, and is characterized in that the means for regulating the smoke concentration comprise a mixing chamber which is provided with an air supply opening and is connected at one side to the smoking chamber and at the other side to a smoke generator, and also a mixing chamber which is connected at one side to the outlet of the first mixing chamber and at the other side to the smoking chamber and smoke outlet. More particularly, the smoke gas concentration is regulated by regulating the air supply to the smoke generator and that to the mixing chamber which is connected to the smoke generator. Smoke sensors, in particular infrared smoke sensors, for regulating the smoke emission are also present. It has thus been found to be possible to obtain products of very consistent quality.

## Description

The invention relates to an apparatus for subjecting consumable products to a smoke product in a smoking chamber which is provided with means for supplying and discharging the products, means for supplying and discharging smoke gases, and also a smoke generator connected to the smoking chamber, the smoking chamber being provided with means for regulating the smoke gas concentration.

It is pointed out that a product is smoked in order to give it a specific colour and flavour, and to a very small degree to preserve it.

Smoking is generally carried out directly by conveying the smoke, obtained by heating wood chips, along the product.

Smoke consists of a liquid and a gas phase. The balance between these two phases is determined by the temperature and the pressure in the smoking chamber. The smoke constituents from the gases and liquids can penetrate into the product as the result of diffusion, or can precipitate from the liquid phase through condensation. Particles can also agglutinate through collision with the product.

Smoke occurs through pyrolysis of wood, in the course of which at a temperature between 220 °C and 500 °C the two main constituents of wood, cellulose and lignin, separate into a large number of organic compounds, the main ones of which are:
- organic acids: have only a limited influence on the colour;
- phenols and alcohols: give a certain aroma;
- carbonyl compounds: have a great influence on the colour; and
- tarry substances.

The largest quantity of organic acids and phenols occurs at a pyrolysis temperature of 400 _{°} C, and an oxidation temperature of 200 _{°} C with the supply of an excess of oxygen.

Since no further smoke forms above 500 °C, but the concentration of polycyclic hydrocarbons does increase, control of the pyrolysis temperature is very important.

Smoke can be generated in the following ways:

### 1. Friction smoke

In this case smoke is obtained by pressing a block of wood against a rotating cylinder, thereby causing the temperature of the wood to rise as the result of friction. The heat generated by the friction depends on the force with which the wood is pressed against the rotating cylinder, the peripheral speed, the contact surface and the roughness of the surface of the cylinder. Apart from heat of friction, heat of combustion is also produced. As a result of the uncontrolled supply of air and the absence of temperature control in the combustion zone, the pyrolysis temperature can rise to far above 500 _{°} C. This makes the combustion process uncontrollable.

### 2. Combustion smoke

In the case of this principle the wood chips are heated by open fire, gas or an electric heating element. This heating can be carried out by simply igniting the wood, or by continuous heating. If the wood is simply ignited, this means that the heat produced by the pyrolysis must be sufficient to maintain the process. Here again, as a result of the uncontrolled supply of air and the absence of temperature control in the combustion zone, the pyrolysis temperature can rise to far above 500 _{°} C. Here again, the combustion process is uncontrollable as a result.

### 3. Condensation smoke

Superheated steam at a temperature of 300 - 400 _{°} C is mixed with compressed air and conveyed through wood chips, and precipitates on the colder product in the smoking chamber, as the result of condensation. Here again, the temperature is partly determined by the available quantity of oxygen, as a result of which the pyrolysis temperature can rise much higher than the temperature of the superheated steam. Additional measures are therefore necessary to make the combustion process controllable.

The supply of the smoke from the smoke generator to the smoking chamber is also critical, for more or less condensation smoke can condense on the walls of the supply channels, with the result that the supply is not constant.

Applicants have now found an apparatus of the type described in the preamble which makes it possible to control the smoke generation and thus provide a consistent product quality.

The apparatus according to the invention is characterized in that the means for regulating the smoke concentration comprise a mixing chamber which is provided with an air supply opening and is connected at one side to the smoking chamber and at the other side to a smoke generator, and also a mixing chamber which is connected at one side to the outlet of the first mixing chamber and at the other side to the smoking chamber and smoke outlet.

Such an apparatus also has the advantage that optimum use is made of the smoke gas, and the wood consumption is minimized. Due to the fact that the smoking process is also controllable and reproducible, no flavour or colour deviations occur as a result of variations in the smoking process.

In the case of friction, combustion or condensation smoke the means for regulating the smoke concentration consist in particular of a mixing chamber which is provided with an air supply and is connected at one side to the smoking chamber and at the other side to a smoke generator. In this mixing chamber the smoke supplied by the smoke generator is mixed with fresh air and diluted to such an extent that no risk of explosion can occur.

The outlet channel of the mixing chamber is preferably provided with a smoke sensor for establishing the density of the smoke, so that the density of the smoke supplied to the smoking chamber can be regulated. Such a sensor can be based on various principles:
- measurement of the absorption of ultrasonic sound
- measurement of the attenuation of a reflected (infrared or visible) light ray
- particle counting, or
- measurement of the change in the dielectric properties of the air.

In the apparatus according to the invention, an optical smoke sensor based on measurement of the attenuation of a reflected infrared light ray has been found to be particularly efficient.

More particularly, such an apparatus consists of an infrared transmitter/receiver and a reflector, accommodated in a housing. The lens and the reflector are preferably made of glass. Other materials, for example stainless steel and plastic, have been found to be inefficient, because the smoke particles adhere more readily to such materials.

In order to prevent reflection of the infrared beam, the lens is preferably curved in shape.

According to an embodiment which has proved efficient in practice, lens and reflector of the smoke sensor are provided with heating means, such as an electric heating element. This makes it possible to heat the lens and the reflector to several degrees above the temperature in the smoking chamber and thus to prevent condensation of smoke particles thereon.

The smoking chamber is also expediently provided with a smoke sensor of the type mentioned above.

The smoke sensor of the smoking chamber preferably interacts with means for supplying smoke gases to and discharging them from the smoking chamber. It is thus possible at a certain concentration of the smoke to make it circulate in the smoking chamber, with the result that optimum utilization of the smoke is possible, and the emission into the environment and the wood consumption for generating the smoke can be minimized.

The invention also relates to a process for subjecting consumable products to a smoke product in a smoking chamber, which is characterized in that the treatment is carried out using a smoke sensor, in particular an optical smoke sensor. It is thus possible to carry out the smoking of consumable products under controlled conditions. The treatment is preferably carried out with an essentially constant concentration of the smoke product, so that the degree of diffusion, agglutination and condensation of the smoke constituents on the consumable product to be smoked can be fully controlled, and a constant product quality can therefore be guaranteed.

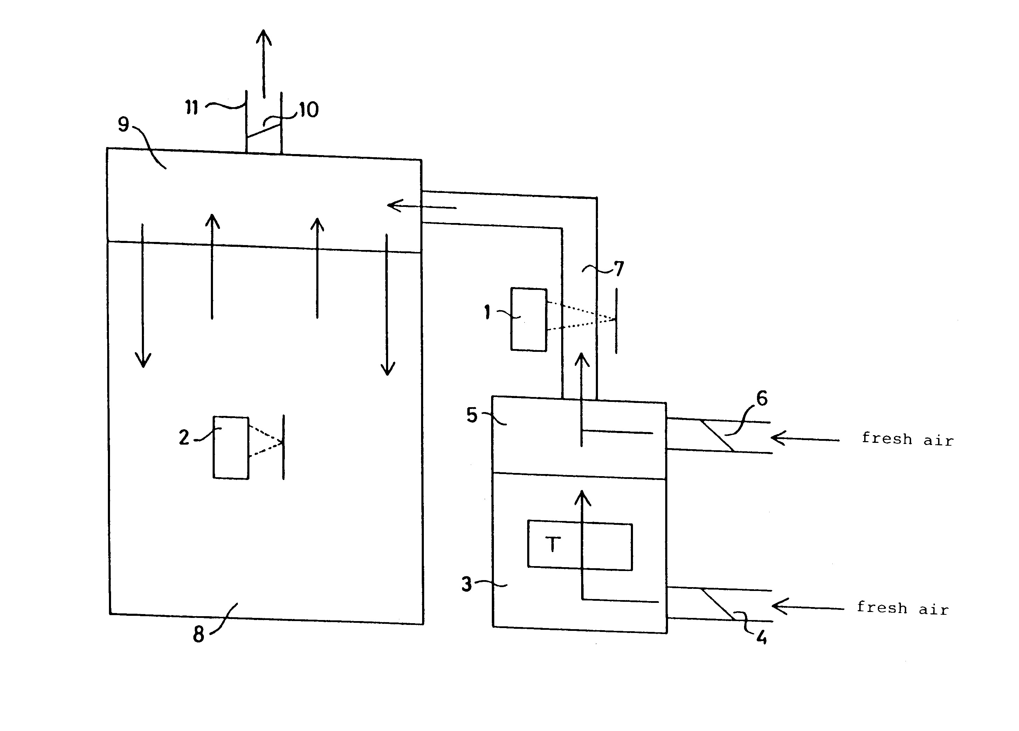

The invention will be explained in further detail with reference to the appended drawing, in which a device according to the invention is shown diagrammatically.

In the drawing chamber 3 forms a smoke generator in which smoke is generated according to the friction, combustion or condensation principle, with fresh air or compressed air being supplied through valve 4. The setting of this valve 4 is controlled on the basis of the temperature in the combustion zone, measured by thermometer T. The smoke formed in the smoke generator 3 then flows into a first mixing chamber 5, in which the smoke is mixed with fresh air supplied through valve 6, in such a way that the smoke concentration is prevented from becoming too high and giving rise to the risk of explosion. In order to control the concentration of the smoke flowing out of mixing chamber 5, a smoke sensor 1 is fitted in channel 7 near the outlet of said mixing chamber. More particularly, the position of valve 6 is controlled on the basis of the output signal from smoke sensor 1.

The smoke flowing out of mixing chamber 5 is then conveyed into a second mixing chamber 9 present before the outlet of the smoking chamber 8, in which second chamber the smoke from channel 7 is mixed with smoke flowing out of the smoking chamber 8. This mixing chamber 9 is, however, used mainly for conditioning as regards the temperature and the relative humidity, and for the mixing of fresh smoke with the atmosphere in the smoking chamber. A smoke sensor, in particular of the optical type, is also present in smoking chamber 8. This sensor 2 is used to determine the smoke concentration in the smoking chamber. Mixing chamber 9 is also provided with an outlet 11 in which a valve 10 is fitted, the maximum width of passage of which valve is determined by the dimensions of the smoking apparatus. This valve is closed only when the smoke density in the smoking chamber has reached the set value.

The smoke sensor (1, 2) used in the present apparatus for measuring the smoke concentration is preferably of the infrared type and consists of an infrared transmitter/receiver and a reflector, accommodated in a housing. The housing with the reflector is designed in such a way that the infrared transmitter/ receiver can be conditioned to a minimum of 100°C and pollution of lens and reflector is minimal. Since smoke particles adhere to glass less quickly than to other materials such as stainless steel or plastic, lens and reflector are made of glass. In order to prevent reflection of the infrared beam, the lens is also curved in shape.

Lens and reflector are expediently heated by means of an electric heating element to several degrees above the temperature in the smoking chamber, so that condensation of in particular the liquid phase from the smoke on lens and reflector is prevented.

Surprisingly, it has been found to be possible according to the invention to control the smoking process and provide a consistent product quality. More particularly, this is possible due to the fact that the smoke formed in smoke gas generator 3 can circulate under controlled conditions in smoking chamber 8.

It is pointed out that as soon as the smoke concentration in the smoking chamber 8 has reached a certain value, the three valves (4, 6 and 10) are closed, and any supply of wood is stopped, so that the smoke in smoking chamber 8 continues to circulate until it has dropped below a certain value, measured by smoke sensor 2.

The apparatus according to the invention therefore makes it possible to control the smoking process completely and to minimize pollution of the environment by the discharged smoke gases.

Although a preferred embodiment is explained above, it will be clear to the person skilled in the art that modifications can be made to it without going beyond the scope of the invention.

## Claims

1. Apparatus for subjecting consumable products to a smoke product in a smoking chamber which is provided with means for supplying and discharging the products, means for supplying and discharging smoke gases, and also a smoke generator connected to the smoking chamber, the smoking chamber being provided with means for regulating the smoke gas concentration, characterized in that the means for regulating the smoke concentration comprise a mixing chamber (5) which is provided with an air supply opening and is connected at one side to the smoking chamber (8) and at the other side to a smoke generator (3), and also a mixing chamber (9) which is connected at one side to the outlet (7) of the mixing chamber (5) and at the other side to the smoking chamber (8) and smoke outlet (11).

2. Apparatus according to claim 1, characterized in that the outlet channel (7) of mixing chamber (5) is also provided with a smoke sensor (1) for regulating the smoke emission.

3. Apparatus according to claim 1 or 2, characterized in that the smoking chamber (8) is also provided with a smoke sensor (2).

4. Apparatus according to claim 3, characterized in that the smoke sensor (2) is an optical smoke sensor, in particular an infrared smoke sensor.

5. Apparatus according to claim 3 or 4, characterized in that the lens and the reflector of the optical smoke sensor are made of glass.

6. Apparatus according to claim 5, characterized in that the lens and the reflector of the smoke sensor are provided with heating means.

7. Apparatus according to claims 3 to 6, characterized in that the smoke sensor (2) interacts with means (4, 6, 10) for supplying smoke gases to and discharging them from the smoking chamber (8).

8. Process for subjecting consumable products to a smoke product in a smoking chamber, characterized in that the treatment is carried out using a smoke sensor (2), in particular an optical smoke sensor.

9. Process according to claim 8, characterized in that the treatment is carried out with an essentially constant concentration of the smoke product.
